# EUROPÄISCHE PATENTANMELDUNG

(11) **EP 3 528 090 A1**
(43) Veröffentlichungstag der Anmeldung: **21.08.2019**
(21) Anmeldenummer: 18156660.5
(22) Anmeldetag: 14.02.2018
(51) Int. Cl.: G06F 3/01

(54) **VORRICHTUNG ZUM DARSTELLEN EINER VIRTUAL REALITY SIMULATION, SOWIE VERGNÜGUNGSEINRICHTUNG MIT EINER SOLCHEN VORRICHTUNG**

(71) Anmelder: VR Coaster GmbH & Co. KG, 67663 Kaiserslautern (DE)
(72) Erfinder: Gordt, Dennis, 79350 Sexau (DE)
(74) Vertreter: Westphal, Mussgnug & Partner Patentanwälte mbB

(57) **Zusammenfassung**

Die vorliegende Erfindung betrifft eine Vorrichtung (2) zum Darstellen einer Virtual Reality Simulation umfassend mindestens eine Datenverarbeitungsanlage (20), durch die die Virtual Reality Simulation erzeugt ist, mindestens ein VR-Anzeigegerät (22), durch das die durch die mindestens eine Datenverarbeitungsanlage (20) erzeugte Virtual Reality Simulation dargestellt wird, und mindestens eine Datenverbindung (21), die die Datenverarbeitungsanlage (20) und das VR-Anzeigegerät (22) verbindet, wobei eine Nachführung (4) vorgesehen ist, und wobei die mindestens eine Datenverarbeitungsanlage (20) mittels der Nachführung (4) dem mindestens einen VR-Anzeigegerät (22) folgt.

## Beschreibung

Die vorliegende Erfindung betrifft eine Vorrichtung zum Darstellen einer Virtual Reality Simulation sowie ein Fahrgeschäft mit einer solchen Vorrichtung, die ein besonderes Erlebnis in einer VR-Erlebniswelt ermöglicht und mit deren Hilfe ein besonders hoher Grad an Immersion erreicht wird.

Aus dem Stand der Technik sind derartige Vorrichtungen in unterschiedlichen Ausgestaltungen bekannt. Das Erzeugen von komplexen Virtual Reality Simulationen erfordert eine große Rechnerleistung von sogenannten Datenverarbeitungsanlagen, die die Virtual Reality Simulationen erzeugen. Die Datenverarbeitungsanlagen erzeugen dabei nicht nur die Virtual Reality Simulation, die auf einem VR-Anzeigegerät dargestellt wird, sondern führen eine Vielzahl von Informationen zusammen, die bei der Erzeugung der Virtual Reality Simulation berücksichtigt werden. Diese Informationen betreffen einerseits die Bewegungen des Benutzers und andererseits Gegenstände, die sich im Bereich des Benutzers befinden und in der dem Benutzer angezeigten VR-Welt wiedergegeben werden. Solche Gegenstände sollen insbesondere das Erlebnis und die Aufregung bei dem Erlebnis steigern, und weitere Sinnesreize neben dem visuellen des Benutzers stimulieren. Insbesondere die Interaktion mit beweglichen Gegenständen erfordert eine besonders hohe Rechenleistung.

In dem Stand der Technik hat sich der Einsatz von sogenannten "Backpack-PCs" bewährt. Backpack-PCs sind herkömmlichen Rucksäcken nachempfunden und umfassen eine Stromversorgung bzw. eine Batterie und eine Datenverarbeitungsanlage, die eine Virtual Reality Simulation erzeugt. Das VR-Anzeigegerät wird mittels einer kabelgebundenen Datenverbindung mit der Datenverarbeitungsanlage verbunden.

Derartige Backpack-PCs ermöglichen eine freie Bewegung des Benutzers, jedoch sind sowohl die Rechenleistung als auch der durch die Spannungsquelle mitgeführte Energievorrat begrenzt, wodurch einerseits das VR-Erlebnis zeitlich begrenzt ist und andererseits die Darstellungsqualität sowie der Detailreichtum der Virtual Reality Simulation begrenzt sind. Darüber hinaus stellen derartige Vorrichtungen eine außerordentliche Gewichtsbelastung des Benutzers dar, so dass sich dieser trotz vergrößerter Bewegungsfreiheit durch das Gewicht beeinträchtigt fühlt und in seiner Bewegungsfreiheit eingeschränkt ist.

Es ist daher die Aufgabe der vorliegenden Erfindung eine Vorrichtung der oben genannten Art bereitzustellen, die es dem Benutzer ermöglicht, eine möglichst detailgetreue und aufwendige Virtual Reality Simulation mit einem besonders hohen Grad an Immersion zu erleben. Darüber hinaus soll die Einsatzdauer keinen Beschränkungen unterliegen und die Vorrichtung zum Durchsatzbetrieb eines Fahrgeschäftes im fortlaufenden Tagesbetrieb geeignet sein. Der Benutzer soll einen größtmöglichen Bewegungsfreiraum haben, keiner oder nur einer geringen Gewichtsbelastung ausgesetzt sein und darüber hinaus mit Gegenständen oder anderen Benutzern interagieren können, wodurch das Erlebnis in der VR-Welt nicht nur auf audio-visuelle Reize beschränkt ist.

Diese Aufgabe ist erfindungsgemäß durch die Vorrichtung mit den Merkmalen des Anspruchs 1 sowie dem Fahrgeschäft mit den Merkmalen des Anspruchs 9 gelöst. Die Unteransprüche haben vorteilhafte Weiterbildungen der Erfindung zum Inhalt.

Die erfindungsgemäße Vorrichtung zum Darstellen einer Virtual Reality Simulation mit den Merkmalen des Anspruchs 1 umfasst mindestens eine Datenverarbeitungsanlage, durch die die Virtual Reality Simulation erzeugt wird, mindestens ein VR-Anzeigegerät, durch das die durch die mindestens eine Datenverarbeitungsanlage erzeugte Virtual Reality Simulation dargestellt wird, und eine Datenverbindung, die die Datenverarbeitungsanlage und das VR-Anzeigegerät verbindet. Darüber hinaus ist mindestens eine Nachführung vorgesehen, die die mindestens eine Datenverarbeitungsanlage transportiert, so dass die Datenverarbeitungsanlage dem VR-Anzeigegerät folgt. Nicht der Benutzer, sondern die Nachführung befördert die Datenverarbeitungsanlage, so dass die Datenverarbeitungslage keinerlei Beschränkungen hinsichtlich Baugröße und Gewicht unterliegt. Weiterhin ist der mitgeführte Energievorrat nicht auf die Größe einer von Menschen tragbaren Batterie begrenzt. Die Vorrichtung ist daher besonders für den Einsatz in einem Fahrgeschäft mit einem kontinuierlichen Tagesbetrieb geeignet. Die Nachführung folgt dem VR-Anzeigegerät bzw. dem Benutzer, wodurch die Datenverbindung zwischen dem VR-Anzeigegerät und der Datenverarbeitungsanlage nur kurze Entfernungen überbrücken muss, wodurch sowohl die Datenübertragung als auch der Geschäftsbetrieb weniger störanfällig sind. Die Nachführung ist daher derart ausgebildet, dass sie Mittel zur Aufnahme der Datenverarbeitungsanlage aufweist und eine Beförderung der Datenverarbeitungsanlage mittels der Nachführung ermöglicht wird.

Darüber hinaus ist es besonders vorteilhaft, wenn die Datenverbindung zwischen der Datenverarbeitungsanlage und dem VR-Anzeigegerät eine drahtlose Verbindung ist oder wenn die Datenverbindung zwischen der Datenverbindunganlage und dem VR-Anzeigegerät eine kabelgebundene Verbindung ist. Insbesondere die kabellose Verbindung zwischen der Datenverarbeitungsanlage und dem VR-Anzeigegerät hat den Vorteil, dass der Benutzer in seiner Bewegung völlig frei ist. Besonders bevorzugt kann mittels der Datenverbindung der VR-Content gestreamt werden. Die Nachführung sollte dabei derart angeordnet sein, dass der Abstand zwischen der Datenverarbeitungsanlage und dem VR-Anzeigegerät auf ein Minimum reduziert ist, wodurch eine geringere Funkleistung erforderlich ist. Kabelgebundene Datenverbindungen können dabei derart ausgebildet sein, dass Relativbewegungen zwischen dem VR-Anzeigegerät und der Datenverarbeitung elastisch aufgefangen werden, wodurch auch bei einer kabelgebundenen Datenverbindung zwischen dem VR-Anzeigegerät und der Datenverarbeitungsanlage der Benutzer sich nicht in seiner Bewegungsfreiheit eingeschränkt fühlt.

Gemäß einer weiteren vorteilhaften Ausgestaltung der vorliegenden Erfindung umfasst die Nachführung ein Fahrzeug, insbesondere ein Schienen-, Land- oder ein Luftfahrzeug. Als Landfahrzeuge werden sämtliche Bauformen von rad- oder kettenbetriebenen Fahrzeugen verstanden, wobei auch Mischformen möglich sind. Als Luftfahrzeug werden insbesondere Flugdrohnen in der Bauform eines Multicopters bevorzugt oder Luftfahrzeuge, die ganz oder teilweise nach dem archimedischen Prinzip funktionieren. Die hier beschriebene Erfindung ist nicht auf die oben genannten Fahrzeuge beschränkt, sondern es sind auch sämtliche Vorrichtungen denkbar, die zur Aufnahme von Datenverarbeitungsanlagen geeignet sind und eine Nachführung bilden können.
Das Fahrzeug transportiert somit die Datenverarbeitungsanlage und folgt dem Benutzer. Das Fahrzeug kann ohne weiteres größere Lasten transportieren und die Größe und das Gewicht der Datenverarbeitungsanlage, sowie der Energiequelle unterliegen keinen benutzerspezifischen Beschränkungen. Das Fahrzeug kann ortsunabhängig dem Benutzer folgen, wodurch eine maximale Bewegungsfreiheit des Benutzers erreicht ist. Die Vorrichtung kann sowohl in Innenräumen als auch in der freien Umgebung Anwendung finden.
Dabei ist es besonders vorteilhaft, wenn das Fahrzeug ein autonom fahrendes Fahrzeug ist und eine Sensorik nutzt, um dem VR-Anzeigegerät bzw. dem Benutzer zu folgen. Die Sensorik kann mindestens eine Kamera, GPS, Indoor-Tracking, Radar und/oder Funk umfassen. Insbesondere sind dabei sogenannte low-energy Sensorik-Module bevorzugt, wodurch der Energievorrat der Spannungsquelle möglichst lange erhalten ist.

Die Kamera kann den Benutzer optisch verfolgen. Eine Abstandsmessung zur Erfassung des Abstandes zwischen dem Benutzer und dem Fahrzeug kann durch eine 3D-Kamera oder geeignete Sensoren durchgeführt werden. Auch mittels GPS- oder Indoor-Tracking kann das Fahrzeug dem Benutzer folgen.

Die Sensorik erfasst folglich die Bewegung des VR-Anzeigegerätes bzw. des Benutzers und sorgt dafür, dass der Abstand zwischen der Datenverarbeitungsanlage und dem VR-Anzeigegerät bzw. dem Benutzer nicht ein toleriertes Maß übersteigt.

Weiterhin ist es vorteilhaft, wenn die Nachführung mindestens eine Schienenführung und das Fahrzeug aufweist, wobei die Datenverarbeitungsanlage mittels des Fahrzeugs entlang der Schienenführung geführt ist. Schienenführungen sind im Allgemeinen dafür bekannt, eine möglichst reibungsfreie Bewegung zwischen dem Fahrzeug und der Schienenführung zu ermöglichen, wodurch der Reibwiderstand bei dem Nachführen der Datenverarbeitungsanlage auf das Geringste reduziert ist. Dies ist insbesondere bei einer kabelgebundenen Verbindung zwischen der Datenverarbeitungsanlage und dem VR-Anzeigegerät von Vorteil, da der Benutzer das Fahrzeug einfach hinter sich her ziehen kann. Der Benutzer fühlt sich aufgrund dieser Leichtgängigkeit nicht in seiner Bewegungsfreiheit eingeschränkt oder durch diese ausgebremst. Insbesondere durch den hohen Grad an Immersion nimmt der Benutzer das Mitziehen der Datenverarbeitungsanlage nicht wahr.

Gemäß einer weiteren Ausgestaltung der vorliegenden Erfindung ist es besonders vorteilhaft, wenn die Nachführung eine Stromversorgung aufweist. Die Datenverarbeitungsanlage, sowie das VR-Anzeigegerät - bei einer kabelgebundenen Verbindung zwischen dem VR-Anzeigegerät und der Datenverarbeitungsanlage - werden somit mittels der Stromversorgung der Nachführung mit elektrischer Energie versorgt. Der Einsatz der Vorrichtung ist somit zeitlich nicht begrenzt und die Datenverarbeitungsanlage muss nicht in Hinblick auf Energieeffizienz optimiert werden. Der Leistungsfähigkeit und dem graphischen Detailreichtum sind somit keine Grenzen gesetzt. Die Stromversorgung kann beispielsweise mittels einer stromführenden Schiene realisiert werden, die Teil der Schienenführung ist, oder beabstandet zu dieser verläuft. Alternativ kann die Stromversorgung ein stromleitendes Gitternetz sein, welches oberhalb des Benutzers in dem Raum angeordnet ist. Die Nachführung bzw. das Fahrzeug der Nachführung umfasst typischer Weise einen Stromabnehmer, der eine elektrische Verbindung mit der Stromversorgung herstellt.

Weiterhin ist es darüber hinaus besonders vorteilhaft, wenn die Schienenführung oder das Fahrzeug einen Antrieb aufweist, wodurch das Fahrzeug der Schienenführung zusammen mit der Datenverarbeitungsanlage selbstständig dem VR-Anzeigegerät bzw. dem Benutzer folgt.

Auch ist es besonders vorteilhaft, wenn die Nachführung, insbesondere die Schienenführung, eine geschlossene umlaufende Bahn umschreibt. Das Fahrzeug kann die Nachführung ohne einen Richtungswechsel unbegrenzt oft abfahren, ohne dass ein Eingriff durch den Benutzer oder eine andere Person erforderlich ist.

Ferner betrifft die vorliegende Erfindung eine Vergnügungseinrichtung mit mindestens einer erfindungsgemäßen Vorrichtung. Die Vergnügungseinrichtung kann einer Vielzahl von Benutzern zeitgleich das Erleben einer Virtual Reality Simulation ermöglichen.

Gemäß einer vorteilhaften Ausgestaltung der Erfindung können mehrere Datenverarbeitungsanlagen der Vorrichtung miteinander kommunizieren, so dass die unterschiedlichen Benutzer auch interagieren können. Die Benutzer können dabei entweder die gleiche Virtual Reality Simulation erleben oder eine andere Virtual Reality Simulation, welche den persönlichen Vorlieben des jeweiligen Benutzers entspricht. Die Datenverarbeitungsanlagen tauschen sowohl ihre als auch die Position des Benutzers aus und verhindern unkontrollierte Kollisionen.

Weiterhin ist es vorteilhaft, wenn die Vergnügungseinrichtung einen Erlebnispfad aufweist, der einer umlaufenden Bahn folgt. Der Erlebnispfad gibt den durch den Benutzer begehbaren Weg durch die Vergnügungseinrichtung durch physische Mittel oder eine entsprechende Darstellung in der VR-Welt vor, wobei die physischen Mittel in das Geschehen in der VR-Welt eingebunden sein können. Durch den Erlebnispfad ist die Bewegungsfreiheit des Benutzers künstlich eingeschränkt, wodurch das Nachführen der Datenverarbeitungsanlage mittels der Nachführung aufgrund des vordefinierten Raums, in dem sich der Benutzer bewegen kann, besonders einfach erfolgen kann. Darüber hinaus ist durch den vorgegebenen Erlebnispfad der Benutzer in seiner Entdeckungsfreiheit eingeschränkt und angehalten, sich zügig durch den Parcours zu bewegen, so dass eine für die Vergnügungseinrichtung erforderliche Durchlaufrate für ein wirtschaftliches Betreiben des Fahrgeschäftes sichergestellt ist.

Der Verlauf des Erlebnispfads und der Verlauf der Nachführung, insbesondere der Schienenführung, korrelieren gemäß einer weiteren bevorzugten Ausgestaltung der Erfindung miteinander. Der Verlauf der Nachführung entspricht entweder genau dem Verlauf des Erlebnispfads oder weist geringfügige Abweichungen zu diesem auf. Somit stimmen die Verläufe des Erlebnispfades und der Nachführung im Wesentlichen überein, wobei die Nachführung gezielt dafür eingesetzt werden kann, den Bewegungsspielraum jenseits des Erlebnispfades für den Benutzer einzuschränken.

Bevorzugt sind dabei der Einstieg und der Ausstieg in dem Erlebnispfad zueinander benachbart angeordnet, so dass die erfindungsgemäße Vorrichtung schnellstmöglich nach dem Gebrauch für einen neuen Benutzer wiederverwendet werden kann. Aus Gründen der Hygiene kann das VR-Anzeigegerät austauschbar an der Vorrichtung angeordnet sein, so dass nach jeder Benutzung eine entsprechende Reinigung erfolgen kann, ohne dass es zu einer Verzögerung im Ablauf kommt. Der Erlebnispfad kann dabei den unterschiedlichsten Wegführungen folgen, Steigungen, Neigungen aufweisen und sich über mehrere Etagen erstrecken. Besonders vorteilhaft ist dabei, wenn der Einstieg und der Ausstieg an einem lokalen Minimum, oder sogar an einem absoluten Minimum des Erlebnispfades in Bezug auf den Höhenverlauf angeordnet sind, damit die Nachführung beim Einsteigen und beim Aussteigen keine Bremskräfte oder Haltekräfte erzeugen muss.

Darüber hinaus ist es besonders vorteilhaft, wenn das Fahrgeschäft eine Indoor-Anlage bzw. Innenraumfahrgeschäft ist, wodurch die Bestandteile des Fahrgeschäfts vor Eindringen von Niederschlagsfeuchtigkeit geschützt sind.

Nachfolgend wird ein bevorzugtes Ausführungsbeispiel der Erfindung unter Bezugnahme auf die begleitenden Zeichnungen im Detail beschrieben. In der Zeichnung ist:
- Figur 1: ein erstes Ausführungsbeispiel einer erfindungsgemäßen Vorrichtung mit einer Nachführung mit einer Schienenführung, die oberhalb des Benutzers angeordnet ist,
- Figur 2: ein zweites Ausführungsbeispiel einer erfindungsgemäßen Vorrichtung mit einem Landfahrzeug, das eine Datenverarbeitungsanlage transportiert, wobei eine kabelgebundene Datenverbindung die Datenverarbeitungsanlage mit einem VR-Anzeigegerät verbindet,
- Figur 3: ein drittes Ausführungsbeispiel der erfindungsgemäßen Vorrichtung gemäß Figur 2, wobei eine drahtlose Datenverbindung den VR-Content von der Datenverarbeitungsanlage zu dem VR-Anzeigegerät überträgt und das Landfahrzeug dem Benutzer vollständig autonom folgt,
- Figur 4: ein viertes Ausführungsbeispiel der erfindungsgemäßen Vorrichtung, wobei die Nachführung mittels einer Flugdrohne realisiert ist, und
- Figur 5: ein Fahrgeschäft mit einer erfindungsgemäßen Vorrichtung gemäß Figur 1.

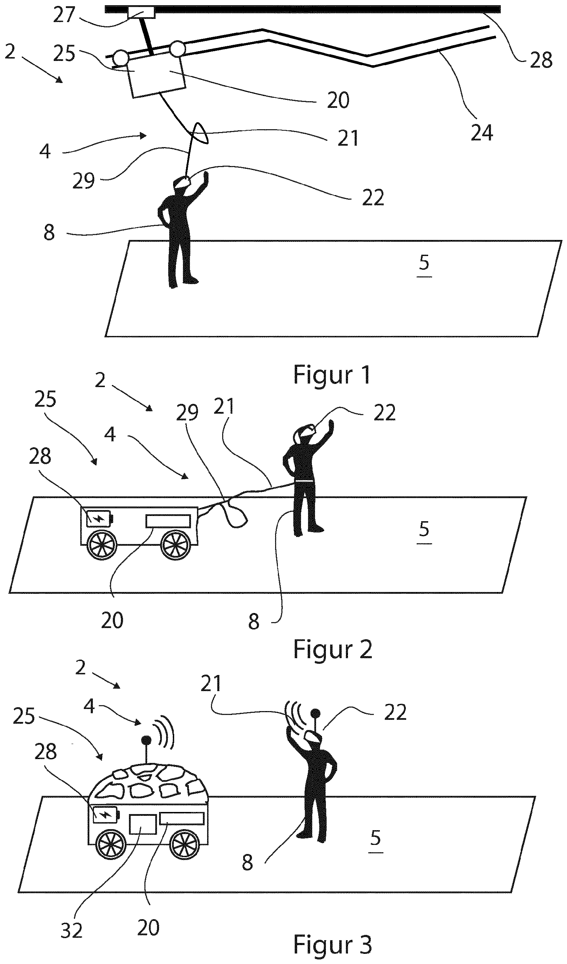

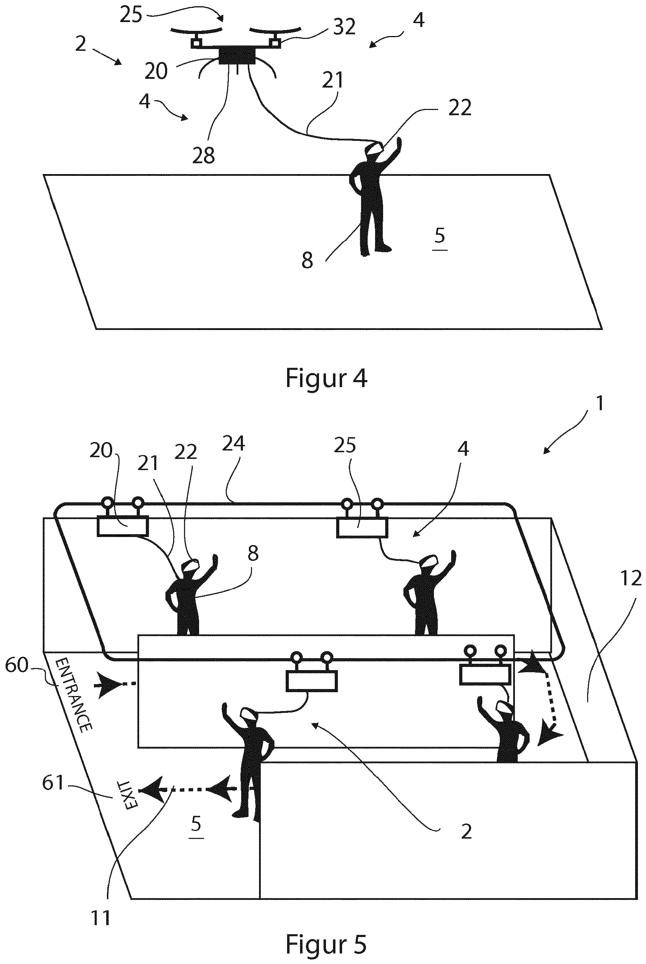

Nachfolgend wird unter Bezugnahme auf die Figuren 1 bis 4 eine Vorrichtung 2 gemäß vier bevorzugten Ausführungsbeispielen der Erfindung im Detail beschrieben. Figur 5 bezieht sich auf ein bevorzugtes Ausführungsbeispiel eines Fahrgeschäfts 1.

Die Vorrichtung 2, dargestellt in Figur 1, umfasst eine Datenverarbeitungsanlage 20, die eine Virtual Reality Simulation erzeugt, ein VR-Anzeigegerät 22, eine Datenverbindung 21 und eine Nachführung 4.Die Nachführung 4 umfasst dabei die datenverarbeitungsanlage 20.

Ein Benutzer 8 trägt das VR-Anzeigegerät 22 das nach Art eines Head-mounted Displays ausgebildet ist vor seinen Augen. Dabei wird das Bild der optischen Realität im aktuellen Sichtfeld des Benutzers mittels des Head-mounted Displays durch die stereoskopische Darstellung einer virtuellen Realität ersetzt, die durch die Datenverarbeitungsanlage 20 erzeugt wird und mittels der Datenverbindung 21 zu dem VR-Anzeigegerät 22 übertragen ist. Die Darstellung der virtuellen Realität bzw. des VR-Contents erfolgt in Abhängigkeit von Position und/oder Ausrichtung des Head-mounted Displays synchron zu der Kopfbewegung des Benutzers 8 und wird in Echtzeit angepasst. Auch kann die optische Realität von einer Kamera aufgenommen werden und in der Darstellung des Head-mounted Displays durch Einspielen von Augmented-Reality-Effekten erweitert werden.

Das VR-Anzeigegerät 22 ist mittels der kabelgebundenen Datenverbindung 21 mit der Datenverarbeitungsanlage 20 verbunden. Die Datenverarbeitungsanlage 20 ist vorzugsweise ein Rechner mit besonders hoher Rechenleistung, wodurch eine sehr hohe grafische Qualität des durch das VR-Anzeigegerät 22 VR-Content erreicht ist.

Der Benutzer 8 kann sich beim Erleben der VR-Welt in einem Raum 5 bewegen, wobei die Relativbewegungen zwischen dem Benutzer 8 und der Datenverarbeitungsanlage 20 einerseits durch die Länge der kabelgebundenen Datenverbindung 21 ermöglicht ist und andererseits durch die Nachführung 4.

Die Nachführung 4 umfasst eine Schienenführung 24, auf der ein Fahrzeug 25 in der Form eines Schlittens oder Wagons beweglich angeordnet ist und auf dem die Datenverarbeitungsanlage 20 angeordnet ist. Die Schienenführung 24, das Fahrzeug 25 und die Datenverarbeitungsanlage 20 sind oberhalb des Benutzers 8 in dem Raum 5 angeordnet, so dass die Nachführung 4 und die Datenverarbeitungsanlage 20 dem Benutzer 8 bei einer Bewegung in dem Raum 5 nicht im Wege stehen.

Das Nachführen des Fahrzeugs 25 bzw. der Datenverarbeitungsanlage 20 in dem vorliegenden Beispiel erfolgt mittels eines Drahtseils 29, welches gleichzeitig als Führung für die kabelgebundene Datenverbindung 21 dient. Das Drahtseil 29 bzw. auch die kabelgebundene Datenverbindung 21 können mittels eines Federseilzuges in Spannung gehalten werden, wodurch plötzliche Bewegungen des Benutzers 8 federnd abgefangen werden können, um dem Benutzer 8 bei der Bewegung durch den Raum 5 eine größtmögliche Bewegungsfreiheit zu ermöglichen.

Darüber hinaus umfasst die Nachführung 4 eine Stromversorgung 28, wodurch die Datenverarbeitungsanlage 20 und das VR-Anzeigegerät 22 mit elektrischer Energie versorgt sind. Die Stromversorgung 28 kann in die Schienenführung 24 integriert sein, zum Beispiel mittels mindestens einer zusätzlichen Stromschiene. Ein Stromabnehmer 27 an dem Fahrzeug 25 greift den elektrischen Strom der Stromversorgung 28 ab und versorgt somit die mit dem Fahrzeug 25 bewegliche Datenverarbeitungsanlage 20.

Figur 2 ist ein zweites Ausführungsbeispiel der Vorrichtung 2 zu entnehmen. Die Nachführung 4 umfasst das Fahrzeug 25 bzw. ein Landfahrzeug, welches von dem Benutzer 8 mit Hilfe eines Drahtseils 29 und/oder einer Deichsel gezogen wird. Das LandFahrzeug 25 transportiert die Datenverarbeitungsanlage 20 sowie eine Stromversorgung 28, durch die die Datenverarbeitungsanlage 20 mit elektrischer Energie versorgt ist. Die Stromversorgung 28 ist im vorliegenden Fall eine wiederaufladbare Batterie, welche durch eine geeignete Ladestation in dem Fahrgeschäft 1 aufladbar ist. Die Ladestationen können bevorzugt kabellose Ladestationen sein.

Das Drahtseil 29 oder die Deichsel zum Ziehen des Fahrzeuges 25 sind beispielsweise mittels eines Gürtels 23 an dem Benutzer 8 befestigt.

Ein weiteres Ausführungsbeispiel ist Figur 3 zu entnehmen, welches in Analogie zu dem Ausführungsbeispiel gemäß Figur 2 ein Fahrzeug 25 aufweist, welches die Datenverarbeitungsanlage 20 transportiert. In diesem Ausführungsbeispiel ist die Nachführung 4 jedoch nicht physisch mit dem Benutzer 8 gekoppelt, sondern als autonom fahrendes Fahrzeug 25 ausgebildet, wodurch der Benutzer 8 sich völlig frei fühlt und sich ungehindert bewegen kann.

Das Fahrzeug 25 folgt dem Benutzer 8 mittels einer intelligenten Steuerung und einer Sensorik. Die Sensorik umfasst dabei ein visuelles Tracking mittels mindestens einer Kamera, einen Abstandsmesser, durch den der Abstand zu dem Benutzer erfasst ist, GPS oder für Innenraumanwendungen Indoor-Tracking via Bluetooth oder Wlan oder ähnlichem. Das Fahrzeug 25 folgt dem Benutzer 8 in einem vorgegeben jedoch beliebig einstellbaren Abstand z.B. 2m und versucht dabei stets, in der Bewegungsrichtung des Benutzers 8 hinter ihm zu bleiben.

Das autonom fahrende Fahrzeug 25 umfasst neben einer Stromversorgung 28 und der Datenverarbeitungsanlage 20 Antriebe 32, durch die das autonom fahrende Fahrzeug 25 angetrieben und gelenkt wird. Die Stromversorgung 28 ist eine wiederaufladbare Batterie, die an dafür vorgesehenen Positionen in dem Fahrgeschäft kabellos bzw. induktiv oder herkömmlich mittels Stecker aufgeladen werden kann.

Alternativ kann die Stromversorgung 28 als ein stromleitendes Gitternetz ausgebildet sein, dass im Raum 5 oberhalb des Benutzers 8 angeordnet ist. Ein Stromabnehmer 27 an dem Fahrzeug 25 stellt eine elektrische Verbindung mit dem stromleitenden Gitternetz her, wodurch das Fahrzeug 25 mit elektrischer Energie versorgt wird.

Die Datenverarbeitungsanlage 20 ist dabei mittels einer kabellosen Funkverbindung mit dem VR-Anzeigegerät 22 verbunden, wobei der VR-Content beispielsweise mittels der Funkverbindung gestreamt - also in Echtzeit übertragen - wird. Darüber hinaus erfasst die Datenverarbeitungsanlage 20 einerseits die Position relativ zu dem Benutzer 8, um zu erkennen, ob sich dieser von dem autonom fahrenden Fahrzeug 25 entfernt, um durch entsprechende Zustellbewegung durch die Antriebe 32 diesem zu folgen. Andererseits wird das autonom fahrende Fahrzeug 25 in der VR-Welt positionsgetreu dargestellt, wodurch der Benutzer 8 dieses durch das VR-Anzeigegerät 22 angezeigt bekommt und somit nicht in Gefahr läuft über das autonom fahrende Fahrzeug 25 zu stolpern. Das autonom fahrende Fahrzeug 25 kann beispielsweise in der VR-Welt bzw. dem VR-Anzeigegerät 22 als ein dem Benutzer 8 folgendes Tier - hier eine Schildkröte - dargestellt werden, wobei das Fahrzeug 25 eine entsprechende Oberfläche aufweisen kann, die dem Tier nachempfunden ist, so das damit verbunden auch ein berührungsempfindliches Erlebnis erzeugt werden kann.

Die Datenverarbeitungsanlage 20 eines Benutzers 8 kann ihre Position mit der Datenverarbeitungsanlage 20 anderer Benutzer 8 teilen und vice versa. Somit können mehrere Benutzer 8 in einem Raum 5 eine erfindungsgemäße Vorrichtung 2 nutzen, ohne dass sie gegenseitig Gefahr laufen miteinander zu kollidieren.

Gemäß Figur 4 kann die Nachführung 4 ebenfalls aus einem Luft-Fahrzeug 25 bestehen, welches die Datenverarbeitungsanlage sowie die Stromversorgung 28 für die Datenverarbeitungsanlage 20 transportiert. Das Fahrzeug 25 ist im vorliegenden Ausführungsbeispiel ein Multicopter, wobei die Übertragung der Daten zwischen der Datenverarbeitungsanlage 20 und dem VR-Anzeigegerät 22 analog zu den Datenverbindungen 21 dargestellt in den Figuren 2 und 3 erfolgen kann.

Das Luft-Fahrzeug 25 ist analog zu dem autonom fahrenden LandFahrzeug 25 mit einer Sensorik ausgestattet, durch die das Luft-Fahrzeug 25 dem Benutzer 8 folgen kann.

Figur 5 ist eine stark vereinfachte und schematisiert dargestellte Vergnügungseinrichtung 1 mit einer erfindungsgemäßen Vorrichtung 2 zu entnehmen.

Die Vergnügungseinrichtung 1 weist einen umlaufenden Erlebnispfad 11 auf, den die Benutzer 8 ablaufen können. Oberhalb der Benutzer 8 ist in dem Raum 5 mit dem Erlebnispfad 11 die Nachführung 4 vorgesehen, die als Schienenführung 24 ausgebildet ist. Der Verlauf der Nachführung 4 folgt dabei dem Erlebnispfad 11, so dass der Verlauf der Nachführung 4 dem Verlauf des Erlebnispfades 11 entspricht. Die Benutzer 8 betreten die Vergnügungseinrichtung 1 durch einen Eingangsbereich 60. Im Eingangsbereich 60 können sich die Benutzer 8 ihre individuelle Virtual Reality Simulation auswählen und bekommen ein VR-Anzeigegerät 22 überreicht, welches mittels der kabelgebundenen Datenverbindung 21 mit der an der Schienenführung 24 geführten Datenverarbeitungsanlage 20 verbunden ist und ihnen die VR-Welt darstellt.

Anschließend kann der jeweilige Benutzer 8 dem Erlebnispfad 11 folgen, wobei der Verlauf des Erlebnispfades 11 mit dem Verlauf der Schienenführung 24 korreliert. Der Erlebnispfad 11 ist seitlich durch Gegenstände 12 begrenzt, die den Benutzer 8 auf dem Parcours halten. Darüber hinaus werden Gegenstände 12 in der VR-Welt dargestellt, wodurch der Benutzer 8 nicht Gefahr läuft, mit den Gegenständen 12 unkontrolliert zu kollidieren.

Die an der Schienenführung 24 mittels eines Fahrzeugs 25 mitgeführte Datenverarbeitungsanlage 20 kann mittels der Sensorik und dem Antrieb 32 nachgeführt werden, wobei die Sensorik beispielsweise ein Ziehen an der kabelgebundenen Datenverbindung 21 erfasst oder den Abstand zu dem Benutzer 8 bzw. dem VR-Anzeigegerät 22. Durch die motorisierte Nachführung 4 des Fahrzeugs 25 entlang der Schienenführung 24 ist verhindert, dass die kabelgebundene Datenverbindung 21 unter Zugspannung steht und der Benutzer 8 das Gefühl hat, in seiner Bewegungsfreiheit eingeschränkt zu sein.

Der Benutzer 8 durchläuft den Erlebnispfad 11 und verlässt nach Abschluss des VR-Erlebnisses die Vergnügungseinrichtung 1 durch den Ausgangsbereich 61. Der Ausgangsbereich 61 liegt entlang der umlaufenden Schienenführung 24 direkt neben dem Eingangsbereich, so dass die Vorrichtung 2 zur Darstellung der Virtual Reality Simulation direkt für einen neuen Benutzer 8 bereitsteht. Aus Hygienegründen kann das VR-Anzeigegerät 22 zwischen dem Ausgangsbereich 61 und im Eingangsbereich 60 getauscht bzw. gereinigt werden. Eine derartige Anordnung ist insbesondere für Fahrgeschäfte 1 bestens geeignet, die auf einen hohen Durchsatz an Benutzern abzielen

In dem Ausgangsbereich 61 oder im Eingangsbereich 60 können Ladestation für die Batterien der VR-Anzeigegerät 22 oder der Fahrzeuge 25 angeordnet sein. Da in diesem Bereich die Fahrzeuge 25 und die VR-Anzeigegerät 22 für längere Zeit an einer Position verweilen, können dort bevorzugt kabellos nach dem Induktionsprinzip geladen werden.

Somit kann erfindungsgemäß eine Vorrichtung 2 zum Darstellen einer Virtual Reality Simulation sowie ein Fahrgeschäft 1 mit einer solchen Vorrichtung 2 zur Verfügung gestellt werden, die es ermöglicht eine hoch detaillierte Virtual Reality Simulation zu erleben, durch die ein besonders hoher Grad an Immersion oder sogar Präsenz erzeugt werden kann. Die Vorrichtung 2 ermöglicht das Mitführen einer besonders leistungsfähigen Datenverarbeitungsanlage 20. Die körperlich physische Belastung des Benutzers 8 wird auf das geringstmögliche reduziert, wodurch die Vorrichtung 2 sowohl bei Erwachsenen als auch bei Kindern anatomieunabhängig zur Anwendung kommen kann.

### Bezugszeichenliste

- 1: Vergnügungseinrichtung
- 2: Vorrichtung
- 4: Nachführung
- 5: Raum
- 8: Benutzer
- 11: Erlebnispfad
- 20: Datenverarbeitungsanlage
- 21: Datenverbindung
- 22: VR-Anzeigegerät
- 24: Schienenführung
- 25: Fahrzeug
- 27: Stromabnehmer
- 28: Stromversorgung
- 29: Seil
- 32: Antrieb
- 60: Eingangsbereich
- 61: Ausgangsbereich

## Patentansprüche

1. Vorrichtung (2) zum Darstellen einer Virtual Reality Simulation umfassend:
- mindestens eine Datenverarbeitungsanlage (20), durch die die Virtual Reality Simulation erzeugt ist,
- mindestens ein VR-Anzeigegerät (22), durch das die durch die mindestens eine Datenverarbeitungsanlage (20) erzeugte Virtual Reality Simulation dargestellt wird,
- mindestens eine Datenverbindung (21), die die mindestens eine Datenverarbeitungsanlage (20) und das VR-Anzeigegerät (22) verbindet,
d**adurch gekennzeichnet**, dass mindestens eine Nachführung (4) vorgesehen ist, und dass die mindestens eine Datenverarbeitungsanlage (20) mittels der mindestens einen Nachführung (4) dem mindestens einen VR-Anzeigegerät (22) folgt.

2. Vorrichtung (2) nach Anspruch 1, **dadurch gekennzeichnet, dass** die Datenverbindung (21) zwischen der Datenverarbeitungsanlage (20) und dem VR-Anzeigegerät (22) eine drahtlose Verbindung ist, oder dass die Datenverbindung eine kabelgebundene Verbindung ist.

3. Vorrichtung (2) nach Anspruch 1 oder 2, **dadurch gekennzeichnet, dass** die Nachführung (4) ein Fahrzeug (25), insbesondere ein Schienen-, Land- oder ein Luftfahrzeug, umfasst.

4. Vorrichtung nach Anspruch 3, **dadurch gekennzeichnet, dass** das Fahrzeug (25) ein autonom fahrendes Fahrzeug (25) ist und wenigstens einen Antrieb (32) und eine Sensorik umfasst, und dass das Fahrzeug (25) dem VR-Anzeigegerät (22) oder dem Benutzer (8) in einem Abstand folgt.

5. Vorrichtung nach Anspruch 4, **dadurch gekennzeichnet, dass** die Sensorik mindestens eine Kamera, GPS, Indoor-Tracking, Abstandssensor, Radar und/oder Funkortung umfasst.

6. Vorrichtung (2) nach einem der Ansprüche 3 bis 5, **dadurch gekennzeichnet, dass** die Nachführung (4) mindestens eine Schienenführung (24) aufweist, an der Fahrzeug (25) geführt gehalten ist.

7. Vorrichtung (2) nach einem der vorgenannten Ansprüche, **dadurch gekennzeichnet, dass** die Nachführung (4) eine Stromversorgung (28) umfasst.

8. Vorrichtung (2) nach einem der vorgenannten Ansprüche, **dadurch gekennzeichnet, dass** die Nachführung (4) eine geschlossene Bahn bildet.

9. Vergnügungseinrichtung (1) mit einer Vorrichtung (2) nach einem der vorgenannten Ansprüche.

10. Vergnügungseinrichtung (1) nach Anspruch 9, **dadurch gekennzeichnet, dass** mehrere Datenverarbeitungsanlagen (20) miteinander kommunizieren können.

11. Vergnügungseinrichtung (1) nach Anspruch 9 oder 10, **dadurch gekennzeichnet, dass** die Vergnügungseinrichtung (1) ein Indoor-Fahrgeschäft ist.

12. Vergnügungseinrichtung (1) nach einem der Ansprüche 9 bis 11, **dadurch gekennzeichnet, dass** ein Erlebnispfad (11) vorgesehen ist, der einer umlaufenden Bahn folgt.

13. Vergnügungseinrichtung (1) nach Anspruch 12, **dadurch gekennzeichnet, dass** der Verlauf des Erlebnispfads (11) mit dem Verlauf der Nachführung (4) korreliert.

14. Vergnügungseinrichtung (1) nach einem der Ansprüche 9 bis 13, **dadurch gekennzeichnet, dass** die Nachführung (4) oberhalb, neben, oder unterhalb des Benutzers (8) angeordnet ist.
